(19) Europäisches Patentamt
European Patent Office
Office européen des brevets

(11) **EP 3 514 602 A1**

(12) **EUROPÄISCHE PATENTANMELDUNG**

(43) Veröffentlichungstag:
**24.07.2019 Patentblatt 2019/30**

(51) Int Cl.:
***G02B 27/00*** (2006.01)   ***G02B 21/36*** (2006.01)

(21) Anmeldenummer: **18000055.6**

(22) Anmeldetag: **23.01.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Universitatea Stefan cel Mare Suceava - Romania**
**720229 Suceava (RO)**

(72) Erfinder:
• **Gutt, Gheorghe**
  **720229 Suceava (RO)**
• **Popa, Valentin**
  **720229 Suceava (RO)**
• **Dimian, Mihai**
  **720229 Suceava (RO)**

Bemerkungen:
Geänderte Patentansprüche gemäss Regel 137(2) EPÜ.

(54) **MIKROSKOPOBJEKTIV MIT AUTOMATISCHER FOKUSSIERUNG**

(57) Die Erfindung bezieht sich auf ein Autofokus Mikroskopobjektiv, das bei Auflichtmikroskopen zu einer maximalen optischen Tiefenauflösung, erreicht durch eine Bildaufnahme entlang der Brennpunktlinie im sichtbaren Spektralbereich, führt. Gemäß der Erfindung verwendet das Mikroskopobjektiv eine adaptive Optik mit piezoelektrischen Stellantrieben (3, 12), die einen Konkavspiegel (6) oder einen Konvexspiegel (7) kontrolliert in Richtung der untersuchten Materie (m) bewegen. Die Datenaufnahme und deren Verarbeitung erfolgt über ein optoelektronisches Abbildungs- und Bildgebungssystem (d), einen optoelektronischen Lichtintensitätsmesssystem (e), eine differenzielle Fokuspunktsucheinheit (f), eine Sollwert - und Schrittspannungseinheit (g), eine sensorische Bewegungssteuereinheit (h), einen Computer (i) und eine Software (j). Das Ergebnis der Verwendung des Autofokusobjektivs sind mikroskopische Aufnahmen die in den Brennpunkten entlang der Fokuslinie im sichtbaren Spektralbereich liegen. Die gespeicherten Bilder haben eine hohe optische Tiefenauflösung und können in Form von 3D-Bildern (Tomogramme) oder in Form einer dynamischen Bildwiedergabe, mit einer Frequenz zwischen 1-60 Bilder pro Sekunde, angezeigt werden.

*FIG. 1*

EP 3 514 602 A1

**Beschreibung**

Die vorliegende Erfindung betrifft ein Objektiv mit adaptiver Optik zur Erhöhung der optischen Tiefenauflösung bei Auflichtmikroskopen mit Anwendungen in der Metallografie, Geologie, Forensik, Chemie, Kunststoffe, Verbundwerkstoffe, Biologie, Medizin usw.

In der Mikroskopie wird die Bildqualität durch die optische Auflösung gegeben derer Maximalwert im Brennpunkt des optischen Fokussiersystems, gebildet aus Linsengruppen oder metallischen Spiegelgruppen, liegt. Die horizontale optische Auflösung der Mikroskope ist definiert als der minimale Abstand $d_y$ zwischen zwei Punkten, die durch das menschliche Auge klar unterschieden werden können **[D1],**

$$d_y = \frac{\lambda}{A} = \frac{\lambda}{n \cdot \sin \alpha} \qquad (1)$$

wobei:

λ - die Wellenlänge des Lichtes das für die Bestrahlung der untersuchten Materie verwendet wird

n - der Brechungsindex der transparenten Materie die zwischen dem untersuchten Material und der Objektivlinse des Mikroskops liegt

α - der maximale Halbwinkel, gebildet von zwei Lichtstrahlen die von einem Punkt der untersuchten Materie ausgehen, und durch den Rand der Objektivlinse noch erfasst wird.

A - die numerische Apertur

darstellen.

Durch die Wahl transparenter Materie gelegen zwischen der Objektivlinse des Mikroskops und dem untersuchten Material mit einem Brechungsindex *n* größer als 1 (wobei 1 der Brechungsindex der Luft ist) und der Verwendung von konstruktiven Lösungen, die für Mikroskopobjektive einen Öffnungswinkel α von bis zu 72° ermöglichen wurde die Apertur A auf das technisch höchste mögliche Maximum gebracht. Die Vergrößerungsgrenze M optischer Mikroskopen wird von der Abbschen Regel [D1] gegeben wonach die maximale Vergrößerung $M_{max}$ eines optischen Mikroskops zwischen folgenden Werten liegt:

$$M_{max} = 500 \, A \div 1000A \qquad (2)$$

Aufgrund der verminderten optischen Auflösung ist das Bild oberhalb dieser Grenze unscharf. Durch die Tatsache das optische Mikroskope auf die Brechung des Lichtes basieren wird die optische Auflösung auf die Hälfte der Wellenlänge der verwendeten Lichtbestrahlung begrenzt. Für das sichtbare Spektralfeld entspricht diese Auflösung einem Wellenlängenbereich von ca. 200 nm welcher bei herkömmlichen optischen Mikroskopen, nach Abbschen Regel, zu einer maximalen Vergrößerung $M_{max}$ von 1500-mal führt. Eine Fokussierlinse aus optischem Glas weist jedoch keinen Brennpunkt auf sondern eine Brennlinie (chromatische Aberration) auf der unendliche Brennpunkte liegen. Jeder Wellenlänge im sichtbaren Spektralbereich, gelegen zwischen 390 nm - violett und 780 nm - rot, ist auf der Brennlinie ein Brennpunkt zugeordnet und entsprechend eine gewisse maximale optische Auflösung. Der Grund weshalb ein klassisches mikroskopisches Bild eine relativ geringe Auflösung hat bildet die Tatsache dass der Beobachter, in der Suche eines klaren Bildes, subjektiv sich für nur einen dieser Brennpunkte entscheidet. Durch Pakete von konvexen und konkaven Linsen und durch die Verbesserung derer chemischen Zusammensetzung der Fokussierlinsen wurde im Laufe der Zeit eine Erhöhung der horizontalen optischen Auflösung durch apochromatische und planapochromatische Mikroskop Objektive erzielt. Die ersten liefern eine chromatische Korrektur für die Mitte des sichtbaren Spektrums (gelb- grün), und die letzteren für das gesamte sichtbare Spektrum. Das Problem der optimalen Brennpunkte wurde aber nicht endgültig gelöst, diese Objektive bringen nur eine minimale Verbesserung im Sinne dass mehrere Wellenlängen in einen Brennpunkt des sichtbaren Lichtes gebracht werden. Dieser Brennpunkt wurde so gewählt dass er der höchsten optischen Auflösung des menschlichen Auges entspricht die im gelbgrünen Spektralbereich liegt.

Die Tiefenauflösung $d_z$ ist der minimale Abstand bei dem zwei benachbarte Punkte auf der Flanke einer mikrometrischen Steigung oder Senkung deutlich unterschieden werden können. Ideal für ein optisches Mikroskop wäre dass sowohl die Horizontalauflösung $d_y$ als auch die Tiefenauflösung $d_z$ maximal wären. Diese beiden wichtigen optischen Eigenschaften sind jedoch antagonistisch und durch die Beziehung:

$$\frac{d_y}{d_z} = const \tag{3}$$

verbunden.

Der Versuch, die Tiefenauflösung zu verbessern führt zu einer Verringerung der Horizontalauflösung und umgekehrt. Der Grund liegt dabei dass die Horizontalauflösung des untersuchten Materials durch die numerische Apertur angegeben wird, also durch den Bau der Objektivlinsen und der Natur der Materie die zwischen dem untersuchten Material und dem Objektiv liegt. Im Gegensatz ist die Tiefenauflösung von Wellenlänge und der Breite des Spektralbandes des Bestrahlungslichtes abhängig. Die maximale Auflösung in der Mikroskopie wird durch die Wellenlängen gegeben welche dieselben Werte mit den mikroskopisch untersuchten Details aufweisen. Genauer gesagt um eine maximale Tiefenauflösung für Details die sich im sichtbaren Spektralbereich (cca. 400nm) befinden, müsste das mikroskopische Endbild das Ergebnis einer opto-elektronischer Integration vieler Mikroskopbilder sein die sich im Laufe der progressiven Fokussierung entlang der *Fokuslinie bilden. Entsprechend werden dimensional grössere Tiefendetails in den* Brennpunkten des roten Spektralbandes mit einer besseren optischen Auflösung angezeigt und im Gegensatz weisen dimensional kleinere Tiefendetails im violetten Spektralband eine höhere Auflösung auf.

Die Problematik der Fokussierung in der Mikroskopie ist den Autoren aus mehreren Arbeiten bekannt, hier ist nur das grundlegende, in viele Sprachen übersetzte Dokument [D1], Schumann Herman, Metallographie, 9. Auflage VEB Deutscher Verlag für Grundstoffindustrie Leipzig, 1975, S.34-55 zu nennen.

Zecks automatischer Fokussierung sind den Autoren technische Lösungen aus folgenden Patentschriften bekannt:

Das Dokument D2 - mit dem Titel: Lens drive device, camera module, and camera mounting devices , registriert unter "TW201631348 (A)-2016" beschreibt ein Autofokussystem mit einem linearen Stellantrieb mit einer elektromagnetischen Spule.

Das Dokument D3 - mit dem Titel: Mikroskopapparat, Autofokusvorrichtung und Autofokusverfahren, registriert als JP2017062438 (A) - 2017, beschreibt ein Autofokussystem, das auf einem Phasenvergleich von Lichtstrahlen basiert.

Das Dokument D4 - mit dem Titel: "Focus control device, Focus control Method, Focus control program , Lens device"" , registriert als WO2017057071(A1)-2016 , beschreibt ein Autofokussystem das ebenfals auf Phasenvergleich von Lichtstrahlen basiert.

Das Dokument D5 -TW 201632934 (A1) -2016 mit dem Titel: "Camera module autofocus, actuator and control method thereof" verwenden als Stellantrieb einen Gedächtnislegierungsdraht und ein elastisches Rückstellelement.

Ebenfalls sind den Autoren auch andere Autofokussystemen bekannt die hauptsächlich bei fotografischen Kameras der neuen Generation Anwendungen finden. Bei diesen Kameras wird durch den Stellantrieb eines Regelkreises, meistens ein elektrischer Mikromotor, automatisch der Brennpunkt des fotografischen Objektivs verändert um die beste optische Auflösung für einen gewissen Bereich, von maximaler Interesse, in dem betrachteten Bild zu sichern. Die relativ große Dimension solcher Stellantriebe sowie der Tatsache dass diese nur eine geringe optische Auflösung im sichtbaren Spektralbereich sichern können machen die Lösung in der optischen Auflichtmikroskopie unanwendbar. Es sind ebenfalls noch automatische Fokussysteme bekannt die bei den Radioteleskopen in der Astronomischen Forschung verwendet werden. Diese Systeme basieren alle auf interferometrischer Messung und Regelung des optimalen Fokuspunktes. Auch konfokale Mikroskopie sowie andere Lösungen sind heute in der Lage die optische Tiefenauflösung der Mikroskope wesentlich zu verbessern. Diese hochmodernen technische Lösungen sind zugleich aber auch kostspielig.

Das durch die Erfindung gelöste technische Problem ist ein Autofokusobjektiv für Auflichtmikroskope welches, mit den zugehörigen optoelektronischen Bauteilen, eine maximale optische Tiefenauflösung ermöglicht.

Zu diesem Zweck wird eine adaptive Optik verwendet, die in Bruchteilen einer Sekunde ermöglicht ein große Anzahl von Brennpunkten, angeordnet auf den entsprechenden Wellenlängen der Fokuslinie, automatisch zu fokussieren und die Bilder entsprechend jedem Brennpunkt zu speichern. Industriell, kann das Autofokus Mikroskopobjektiv gemäß der Erfindung, zusammen mit zugehörigem optoelektronischen Bauteilen, auf eine neue Generation von Mikroskopen eingebaut werden dieses kann aber auch zum Ausbau von existierenden Auflichtmikroskopen dienen. Die technische Lösung, entsprechend der Erfindung, basiert darauf dass der einzige Weg zur Steigerung der optischen Tiefenauflösung darin besteht alle Wellenlängen des sichtbaren Lichtes zu nutzen im Sinne der Erzeugung und der Speicherung von Bildern entsprechend den Wellenlängenwerten die auf der Fokuslinie liegen. Die Beziehung der optische Auflösung hat in diesem Fall folgenden Ausdruck:

$$\frac{1}{R_0} = d_z = \frac{k \cdot \lambda}{A} = \frac{k \cdot \lambda}{n \cdot \sin \alpha} \qquad\qquad (4)$$

In dieser Beziehung, die homolog der Gleichung (1) ist, stellt $R_0$ die optische Auflösung dar, und $k$ einen Faktor, dessen Wert unter der Einheit liegt, und der desto niedriger ist desto mehr Brennpunkte auf der Fokuslinie eines Mikroskopes , ausgestattet mit einem Objektiv mit aktiver Optik, erzielt werden können.

Gemäß der Erfindung beschreiben die Autoren ein Mikroskopobjektiv mit aktiver Optik in drei verschiedenen Ausführungsbeispielen die industriell auswertbar sind. Um chromatische Aberrationen auszuscheiden und um das ganze Spektrum, angefangen mit der ultravioletten Strahlung bis zur infraroten Strahlung, nutzen zu können, wird anstelle des klassischen apochromaten oder planapochromaten Mikroskopobjektiv eine konkaver und eine konvexer Silberspiegel verwendet. Einer dieser Spiegel wird, mit mikrometrischen Schritten, gegen den anderen bewegt und bewirkt durch dieses das Verschieben der Brennpunkte die auf der Fokuslinie liegen, und entsprechend jedem dieser Brennpunkte die Speicherung der mikroskopischen Bildaufnahmen die im Vergleich mit der klassischen Brennpunktsuche eine große Tiefenauflösung aufweisen. Um eine hohe Reproduzierbarkeit zu gewährleisten, oszilliert piezoelektrische Stellantrieb auf der Resonanzfrequenz $f_r$:

$$f_r = \frac{1}{2l}\sqrt{\frac{E}{\rho}} \qquad\qquad (5)$$

wobei:

$l$ - die Dicke der piezoelektrischen Quarzplatte
$\rho$ -die Dichte des Quarzes
$E$ - das Quarz-Elastizitätsmodul

sind.

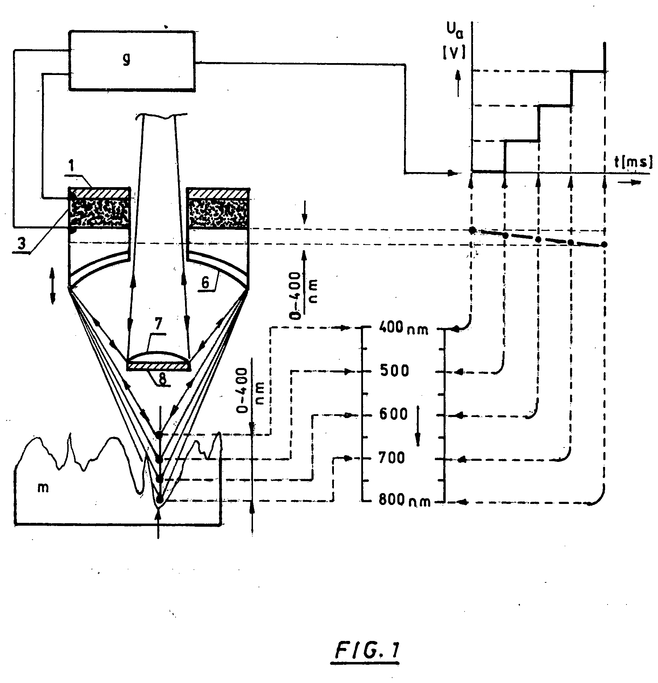

Der empfohlene Wert für die Resonanzfrequenzen liegen im Bereich 0,05 - 0,1 MHz. Bei dieser Frequenz sind Quarzscheibendicken in der Größenordnung von Millimetern möglich welche durch Dilatationen und Kontraktionen alle Wellenlängen entsprechend den Brennpunkten aus dem sichtbaren Spektralbereich abdecken. Über die Resonanzfrequenzspannungssignale der piezoelektrischen Stellantriebe werden steigende und absteigende Stufenspannungssignale eines Signalgebers überlappt. Die steigenden Signalstufen bewirken die Dilatation des piezoelektrischen Materials des Stellantriebes und die absteigenden Signalstufen bewirken die Kontraktion des Piezomaterials des Stellantriebes und entsprechend die axiale Verschiebung des konkaven oder konvexen Silbermetallspiegels der auf einer der planparallelen Seiten des Stellantriebes aufgeklebt ist. Das Inkrement der Bewegung des Silberspiegels ist in der Nanometergrößenordnung und entspricht den Wellenlängenwerten zwischen 390-780 nm, Bereich in dem auch die Brennpunkte der Fokuslinie liegen (Abb. 1).

Die Kontrolle der Axialverschiebung des Brennpunktes auf andere Wellenlängenwerte mithilfe des piezoelektrischen Stellantriebes wird in der Erfindung durch einen kapazitiven Sensor, in Form von planparallelen Scheibenelektroden, erreicht. Bei einem des Ausführungsbeispieles, Abb. 3, Abb.4, und ist der kapazitive Sensor zwischen dem Oberkörper des Objektivs und dem Stellantrieb angebracht, bei den beiden anderen Ausführungsbeispielen Abb.5, und Abb.6 liegt der kapazitive Sensor im Unterkörper des Objektivs zwischen einem Träger und dem piezoelektrischen Stellantrieb. Bei jedem inkrementalen präzisen Bewegungsschritt einer der beiden Fokussiersilberspiegel des Objektivs wird automatisch ein neuer Brennpunkt auf einer gewissen Wellenlänge des sichtbaren Spektralbereiches erzeugt und entsprechend ein mikroskopisches Bild generiert und gespeichert.

Der Sollwert für die Länge der inkrementalen Schritte für die Wellenlängenwerte wird vom Betreiber am Anfang festgelegt und gespeichert. Das Erreichen des Sollwertschrittes durch de piezoelektrischen Stellantrieb wird durch einen Regelkreis validiert der eine differenzielle Vergleichseinheit beinhaltet in der kontinuierlich der Wert der erzielten Bewegung des einen der beiden Silberspiegel, gegeben durch den kapazitiven Sensor, mit dem Wert des Signals eines CCD Sensors welcher die Lichtintensität des von der untersuchten reflektierten Materie misst, verglichen. Die progressive Bündelung der Lichtstrahlen beim Bewegen eines der beiden Silberspiegel entlang der Fokuslinie bewirkt auf der untersuchten Materie eine steigende reflektierte Strahlung, bis der Wert der ersten Ableitung der Lichtintensität $I$ der reflektierten Strahlung zur Zeit t gleich null ist:

$$\frac{dI}{dt} = 0 \qquad\qquad (6)$$

Der Nullwert der 1. Ableitung zeigt immer das Erreichen eines Maximums oder eines Minimums an. Im konkreten Fall bedeutet dieses dass die Lichtstrahlung im Brennpunkt fokussiert ist und entsprechend weist das gespeicherte Mikroskopbild die höchste Tiefenauflösung auf. Alle diese Schritte werden von einem Computer und einer Software verwaltet und überwacht, diese sichern auch die Verarbeitung des während des Piezo-Scans erfassten Bildpakets zwecks dessen Wiedergabe.

Durch die Anwendung der Erfindung wird folgender Vorteil erzielt:
Mikroskopobjektive mit eingebauten piezoelektrischen Quarz Stellantrieben, welche dimensional klein, trägheitslos, ohne Reibung, und ohne Toleranzspiele sind und zugleich eine hohen Dynamik und Reproduktibilität aufweisen ermöglichen durch den Soll- und Istwert Vergleich der adaptiven Optik, eine extrem schnelle und präzise Positionierung der Brennpunkte einer Strahlung auf verschiedene Wellenlängen, deren Werte auf der Fokuslinie liegen, und bringen dadurch ein leistungsfähiges Mittel zur Verbesserung der optischen Tiefenauflösung bei Auflichtmikroskopen. Das Ergebnis der Anwendung dieser Lösung ermöglicht die Erzielung und Speicherung, in Bruchteilen einer Sekunde, eines Paketes hochauflösender Mikroskopbildern, wobei jedes Bild einem Brennpunkt mit einem anderen Wellenlängenwert, gelegen auf der Fokuslinie, entspricht. Dieses Bilderpaket kann, entsprechend der Option des Beobachters, entweder in Form eines 3-D Tomogramms oder in Form einer Folge von dynamischen Bildern angezeigt werden.

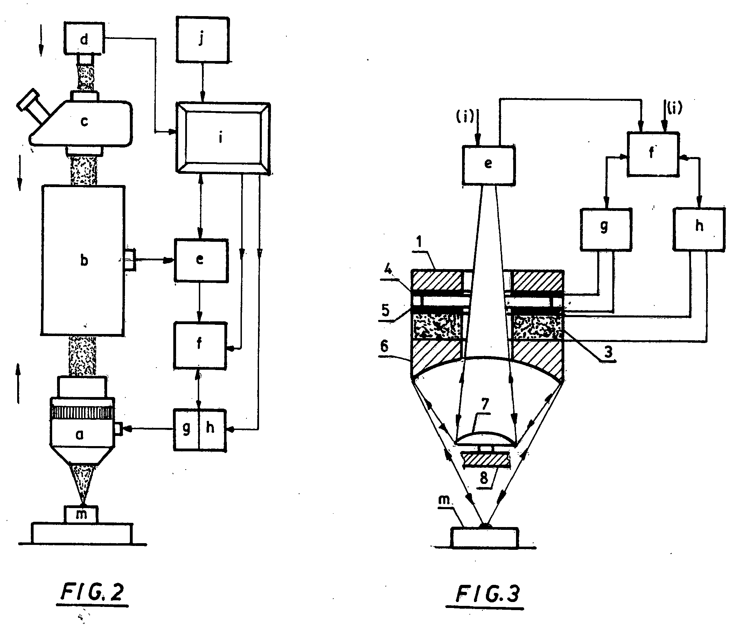

Es werden im Folgenden drei Ausführungsformen der Erfindung, unter Bezugnahme auf Abb. 1 Abb.2; Abb. 3; Abb.4; Abb. 5 und Abb.6, beschrieben:

Abb.1- Grundprinzip des Autofokusmikroskopobjektivs gemäß der Erfindung
Abb.2 - Modularer Aufbau eines optischen Auflichtmikroskops ausgestattet mit einem Autofokusobjektiv
Abb.3 - Optisches Schema des Autofokusmikroskopobjektivs

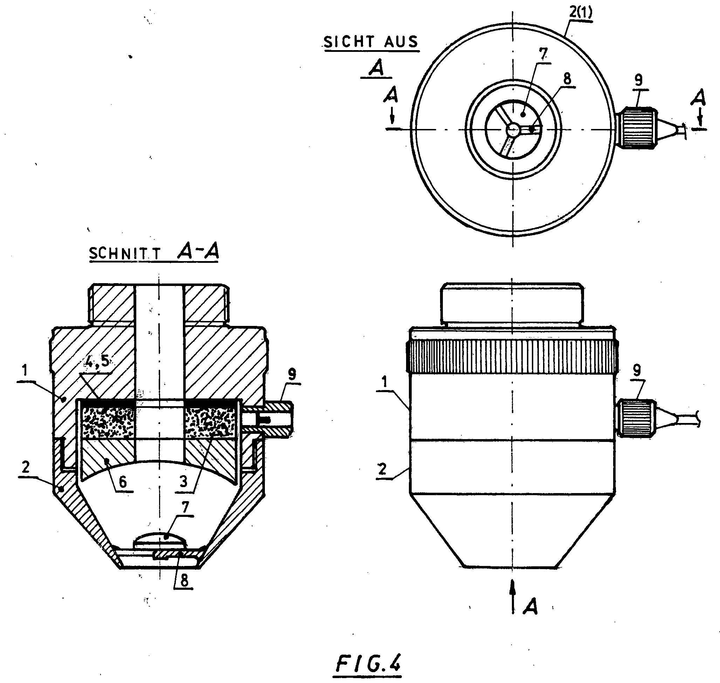

Abb.4 - Bauvariante des Autofokusmikroskopobjektivs aufgrund der Verschiebung des konkaven Spiegels

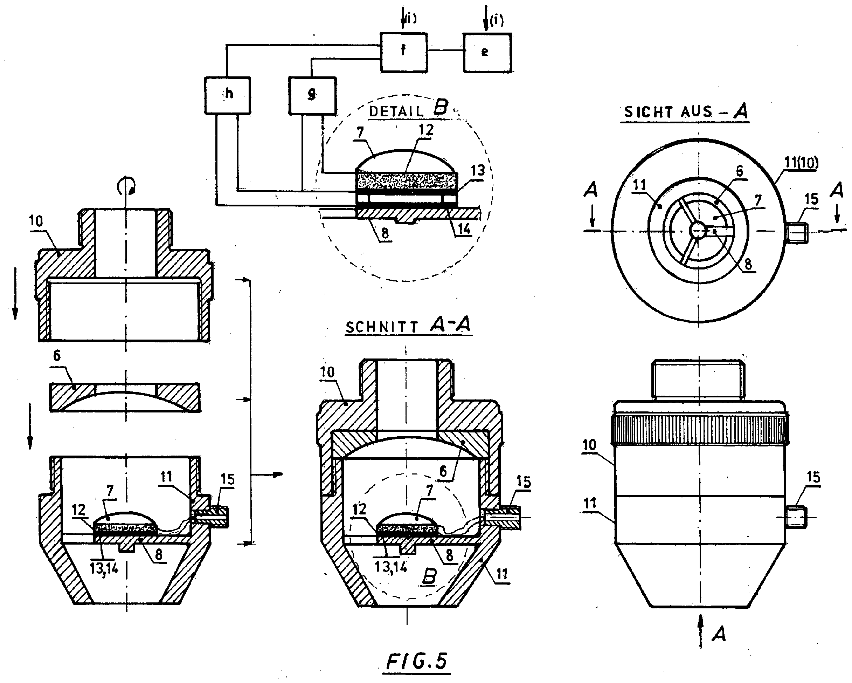

Abb.5 - Bauvariante des Autofokusmikroskopobjektivs aufgrund der Verschiebung des konvexen Spiegels

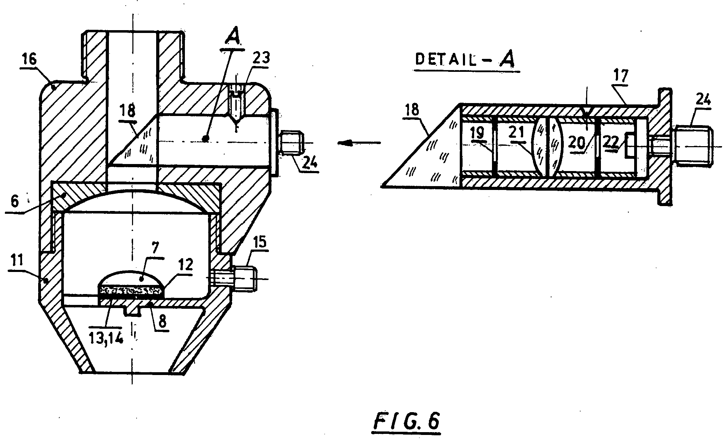

Fig.6 - Bauvariante des eines Autofokusmikroskopobjektivs mit eingebauter Optoelektronik und Verschiebung des konvexen Spiegels

Ein Auflichtmikroskop (Abb.2) das zur Untersuchung einer undurchsichtigen Materie (m) hat in seinem Bau ein Autofokusmikroskopobjektiv (a) gemäss der Erfindung, einen optischen Tubus (b), ein Trinokular (c), ein optoelektronisches Abbildungs- und Bildgebungssystem (d), ein Lichtintensitätmesssystem (e), ein Differenzialfokuspunktsucheinheit (f), eine Schrittspannungseinheit (g), eine kapazitiven Verschiebungsmesseinheit (h), einen Computer (i) und eine Software (j).

Das Mikroskopobjektiv mit gesteuerter Verschiebung des konkaven Spiegels (Abb. 3), (Abb. 4) besteht aus einem Oberkörper (1), einem Unterkörper (2), einem piezoelektrischen Stellantrieb (3) mit planparallelen Flächen und zentralem kreisförmigen Loch, einem kapazitiven Verschiebungssensor bestehend seinerseits aus einem elektrischen Kondensator mit zwei parallelen Sheibenelektroden (4)und(5) die beide ein zentrales Loch aufweisen, einem mobilen konkaven Spiegel (6), einem festen konvexen Spiegel (7), einem Träger (8) mit drei Armen und einem elektrischen Verbindungsleiter (9).

Das Mikroskopobjektiv mit der gesteuerten Verschiebung des konvexen Spiegels, (Abb.5), besteht aus einem Oberkörper (10), einem Unterkörper (11), einem piezoelektrischen Stellantrieb (12) mit planaren Flächen, einem kapazitiven Verschiebungssensor, seinerseits bestehend aus einem elektrischen Kondensator mit zwei parallelen Sheibenelektroden (13)und(14) einem festen konkaven Spiegel (6), einem mobilen konvexen Spiegel (7), einem Träger (8) und einer elektrischen Verbindungsleitung (15).

Das Mikroskopobjektiv mit mit eingebauter Optoelektronik und Verschiebung des mobilen konvexen Spiegels (6) (Abb.6) besteht aus einem Oberkörper (16), einem Unterkörper (11, einem piezoelektrischen Stellantrieb (12) mit planparalellen Flächen, einem kapazitiven Sensor gebildet aus zwei zwei parallelen Sheibenelektroden (13)und(14), einem festen konkaven Spiegel (6), einem Träger (8) und einer elektrischen Verbindungsleitung (15). Im Oberkörper (1) des Mikroskopobjektivs befindet sich ein optoelektronisches Modul (A) seinerseits gebildet aus einem zylindrischen Körper (17), einem optischen Prisma (18), zwei Lochblenden (19)und(20), einer Kolimatorlinse (21), einem CCD Detektor (22) und eine Zentrier- und Fixierschraube (23). Die Verbindung des optoelektronischen Moduls (A) mit dem Lichtintensitätmesssystem (e) wird mittels eines elektrischen Verbindungsleitung (24) erreicht. Die Rolle des optoelektronischen Moduls (A) besteht darin einen Teil der von dem untersuchten Material (m) reflektierten Lichtstrahlen um 90° auf den CCD-Detektor (22) abzulenken, dessen Signal seinerseits vom optoelektronischen Brennpunktlichtintensitätmesssystem (e) zur Suche der Brennpunkte verwendet wird um die Wellenlänge eines bestimmten Brennpunktes auf der Fokuslinie mit dem gespeicherten mikroskopischen Bild zu korrelieren

**EP 3 514 602 A1**

**Patentansprüche**

1. Erfindung Mikroskopobjektiv mit automatischer Fokussierung **dadurch gekennzeichnet dass** zur Erzielung einer maximalen Tiefenauflösung bei optischen Auflichtmikroskopen ein Mikroskopobjektiv mit aktiver Optik, in drei verschiedenen Ausführungen, verwendet wird dass seinerseits von einem optoelektronischen Abbildungs- und Bildgebungssystem (d) einem Lichtintensitätmesssystem (e), einer Differenzialfokuspunktsucheinheit (f), einer Schrittspannungseinheit (g), einer Verschiebungsmesseinheit (h), einem Computer (i) und einer Software (j), unterstützt wird.

2. Mikroskopobjektiv mit automatischer Fokussierung, nach Anspruch 1, **dadurch gekennzeichnet dass** zwecks Abdeckung der Fokussierung, ohne chromatische Aberration, des gesamten sichtbaren Spektralbereiches gelegen zwischen 390 nm und 780 nm, ein konkaver Silberspiegel (6) und ein konvexer Silberspiegel (7) verwendet wird.

3. Mikroskopobjektiv mit automatischer Fokussierung, nach Anspruch 1,und Anspruch 2 **dadurch gekennzeichnet dass** zur Erzielung einer hohen optischen Auflösung, einer großen Bildaufnahmefrequenz, in Abwesenheit eines mechanischen Trägheitsmoments und einer Reibung, werden die Brennpunkte auf der Fokuslinie, durch Verschiebungen des konkaven Silberspiegels (6) gegen und vom konvexen Silberspiegel (7) mit einenem piezoelektrischen Quarz Stellantrieb (3), generiert.

4. Mikroskopobjektiv mit automatischer Fokussierung, nach Anspruch 1, Anspruch 2 und Anspruch 3 **dadurch gekennzeichnet dass** der piezoelektrische Stellantrieb (3), zwischen dem Oberkörper (1) und dem konkaven Silberspiegel (6) angebracht ist.

5. Mikroskopobjektiv mit automatischer Fokussierung, nach Anspruch 1, Anspruch 2 , Anspruch 3 und Anspruch 4 **dadurch gekennzeichnet dass** zwecks einer kontrollierten inkrementalen Distanzverschiebung des konkaven Silberspiegels (6) der piezoelektrische Stellantrieb (3), die Form einer Scheibe mit planparallelen Flächen hat und ein zentrales kreisförmigen Loch aufweist durch das die Lichtstrahlung auf das untersuchte Material (m) fällt und in Form reflektierter Strahlung mit Mikroskopie- und Spektroskopieinformationen zurück zur Fokuspunktsucheinheit (f) und dem Abbildungs- und Bildgebungssystem (d) gelangt.

6. Mikroskopobjektiv mit automatischer Fokussierung nach Anspruch 1, Anspruch 2, und Anspruch 4, in einer anderen Ausführung, **dadurch gekennzeichnet dass** die Veränderung der Brennweite, zwecks einer hohen optischen Tiefenauflösung, einer großen Bilderfassungsrate, in Abwesenheit von mechanischen Trägheitsmomenten und Reibungen, der konvexe Silberspiegel (7) mithilfe eines piezoelektrischen Stellantriebes (12) gegen und vom konkaven Silberspiegel (6) bewegt wird.

7. Mikroskopobjektiv mit automatischer Fokussierung nach Anspruch 1, und Anspruch 6 **dadurch gekennzeichnet, dass** der piezoelektrische Stellantrieb (12) die Form einer dünnen Scheibe mit plan parallelen Flächen hat und zwischen dem Träger (8) und dem konvexen Silberspiegel (7)angebracht ist.

8. Mikroskopobjektiv mit automatischer Fokussierung nach Anspruch 1, und Anspruch 2, in einer anderen Ausführung, **dadurch gekennzeichnet dass**, zwecks Anbringung des Objektivs an jedes beliebige Auflichtmikroskop dieses über ein optoelektronisches Modul (A) seinerseits aus einem zylindrischen Körper (17), einem optischen Prisma (18), zwei Lochblenden (19)und(20), einer Kollimatorlinse (21) und einem CCD-Detektor (22) besteht, wobei das optoelektronisches Modul (A), auf dem Oberkörper (16) des Mikroskopobjektivs mit einer versenkten Schraube (23) blockiert wird, verfügt.

9. Mikroskopobjektiv mit automatischer Fokussierung nach Anspruch 1, **dadurch gekennzeichnet dass** Zwecks Erreichung des Brennpunktes entsprechend einer bestimmten Wellenlänge im sichtbaren Spektralbereich und der Erfassung und Speicherung des mikroskopischen Bildes genau in diesem Brennpunkt wird eine Differenzialfokuspunktsucheinheit (f) verwendet in der die elektrischen Spannungen der Schrittspannungseinheit (g), welche die Speicherung der Stellantriebe (3)und(12) sichert, mit den Spannungswerten des Lichtintensitätmesssystems (e), das seinerseits die maximalen Intensität des reflektierten Lichtes (Kontrast) widerspiegelt und mit den Spannungswerten des kapazitiven Sensorsignals der Verschiebungsmesseinheit (h), die ihrerseits die wirkliche Position des fokussierten Lichtes anzeigt, verglichen.

10. Mikroskopobjektiv mit automatischer Fokussierung nach Anspruch 1 und Anspruch 9, **dadurch gekennzeichnet dass** die Schrittspannungseinheit (g), zusammen mit der Differenzialfokuspunktsucheinheit (f), des Rechners (i) und der Software (j), die piezoelektrischen Stellantriebe (3) und (12) mit mit steigenden und absteigenden Spannungsstufen versorgen und es ermöglichen den konkaven Silberspiegel (6) oder dem konvexen Silberspiegel (7) auf kleinen gut kontrollierten inkrementalen Distanzen zu verschieben und auf der Fokuslinie entsprechende Brennpunkte zu generieren.

**11.** Mikroskopobjektiv mit automatischer Fokussierung nach Anspruch 1 **dadurch gekennzeichnet dass** zwecks Messung der von den piezoelektrischen Stellantrieben (3)und(12) wirklich gefahrenen Distanz eine kapazitive Verschiebungsmesseinheit (h) verwendet wird.

**12.** Mikroskopobjektiv mit automatischer Fokussierung nach Anspruch 1 **dadurch gekennzeichnet dass** die Kondensatoren der kapazitiven Verschiebungsmesseinheit (h) aus zwei Plattenelektroden (4)und(5) mit zentralem Loch und aus zwei Plattenelektroden (13)und(14) ohne zentrales Loch gebildet sind und die zwischen den piezoelektrischen Stellantrieben (3)und(12) und den Körpern (1)und(11), entsprechend den drei beschriebenen Ausführungsformen des Mikroskopobjektiv, eingebaut sind.

**13.** Mikroskopobjektiv mit automatischer Fokussierung nach Anspruch 1 **dadurch gekennzeichnet dass** im Oberkörper (1) des Mikroskopobjektivs ein Lichtintensitätsmesssystem (e) eingebaut ist dass ein optoelektronisches Modul (A) umfasst dass seinerseits aus einem ein zylindrischer Körper (17), einem optisches Prisma (18) zwei optische Lochblenden (19)und(20), einer Kollimatorlinse (21), und einen CCD Detektor (22) , besteht.

**14.** Mikroskopobjektiv mit automatischer Fokussierung, nach Anspruch 1, **dadurch gekennzeichnet dass** die Speicherung des Bildes immer nur dann erfolgt wenn sich die untersuchen Materie (m) in einem Brennpunkt befindet in diesem Zweck wird die maximal reflektierte Lichtstärke $I_{max}$ als Befehlsgröße in Betracht gezogen die ihrerseits durch den Nullwert der ersten Ableitung der reflektierten Lichtintensität I zur Zeit t bestimmt wird.

**15.** Mikroskopobjektiv mit automatischer Fokussierung, nach Anspruch 1, **dadurch gekennzeichnet dass** mit einer entsprechender Software (j) und eines Rechners (i) die Bilder, die während eines Scans der Fokuslinie gespeichert werden, entweder als 3 D Tomogramm oder als Bilderfilm, mit einer Frequenz von von 1-60 Bildern pro Sekunde, angezeigt werden.


**Geänderte Patentansprüche gemäss Regel 137(2) EPÜ.**

**1.** Mikroskopobjektiv mit automatischer Fokussierung in dessen Bau sich zwei piezoelektrische Stellantrieben (3) und (12) und außerhalbdieses sich zwecks Bildaufnahme und Bildbearbeitung ein Lichtintensitatmesssystem (e), ein Computer (i) und eine entsprechende Software(j) befinden **dadurch gekennzeichnet dass** zur Erzielung einer maximalen Tiefenauflösung bei optischen Auflichtmikroskopen, ausgestattet mit einem Mikroskopobjektiv laut der Erfindung, um die Abdeckung der Fokussierung im gesamten sichtbaren Spektralbereich, gelegenzwischen 390 nm und 780 nm,
ohne chromatische Aberration, in einer seiner kompakten Bauarten dieses Objektiv aus einem Oberkörper (1) und einemUnterkörper (2) und in zwei anderen Bauarten aus dem Oberkörper (1) und einem Unterkörper (11) besteht, wobei alle drei Bauarten intern einen konkaven aufgedampften Silberspiegel (6) einen konvexen aufgedampften Silberspiegel (7), einen kapazitiven Verschiebungssensor (h) und einen externen Stufenspannungssignalgeber (g) beinhaltet.

**2.** Mikroskopobjektiv mit automatischer Fokussierung, nach Anspruch 1 und der ersten Bauart **dadurch gekennzeichnet dass** der piezoelektrische Stellantrieb (3), zwischen dem Oberkörper (1) und dem konkaven aufgedampften Silberspiegel (6) eingerichtet ist.

**3.** Mikroskopobjektiv mit automatischer Fokussierung, nach Anspruch 1, Anspruch 2 und der ersten **Bauartdadurch gekennzeichnet dass** zwecks einer kontrollierten inkrementalen Distanzverschiebung des konkaven aufgedampften Silberspiegels (6) der piezoelektrische Stellantrieb (3), die Form einer Scheibe mit planparallelen Flächen hat und ein zentrales kreisförmigen Loch aufweist.

**4.** Mikroskopobjektiv mit automatischer Fokussierung nach Anspruch 1 und nach der zweiten Bauart, **dadurch gekennzeichnet** dassder konvexe aufgedampften Silberspiegel (7) auf einem anderer piezoelektrischen Stellantrieb(12) eingerichtet ist, der die Form einer dünnen Scheibe mit plan parallelen Flächen hat, und seinerseits zwischen dem konvexen aufgedampften Silberspiegel (7) und einer Kondensator Scheibenelektrode (13) liegt.

**5.** Mikroskopobjektiv mit automatischer Fokussierung nach Anspruch 1 und nach der dritten Bauart, **dadurch gekennzeichnet dass**, zwecks Anbringung des Objektivsan jedes beliebige Auflichtmikroskop dieses einen kompakten Bau hat in dessen Inneren sich ein optoelektronisches Modul (A), seinerseits bestehend aus einem zylindrischen Körper (17), einem optischen Prisma (18), zwei Lochblenden (19)und(20), einer Kollimatorlinse (21) und einem CCD-Detektor (22) befinden.

**6.** Mikroskopobjektiv mit automatischer Fokussierung nach Anspruch 1, **dadurch gekennzeichnet dass** der Verschiebungssensors (h) bei der ersten Bauart aus zwei parallelen Kondensator Scheibenelektroden (4)und(5), mit einem zentralen Loch, die zwischen dem piezoelektrischen Stellantrieb (3) und dem Oberkörper (1) eingebaut sind, besteht.

**7.** Mikroskopobjektiv mit automatischer Fokussierung nach Anspruch 1, **dadurch gekennzeichnet dass** der Verschiebungssensors (h) bei der zweiten und dritten Bauart aus zwei parallelen Kondensator Scheibenelektroden (13)und(14), ohne zentrales Loch, die zwischen dem piezoelektrischen Stellantrieb (12) und einem Träger mit drei Armen (8) des Unterkörpers (11) eingebaut sind, besteht.

FIG.1

FIG.2

FIG.3

EP 3 514 602 A1

SICHT AUS
_A_
A

2(1)

7

8

9

A

SCHNITT _A-A_

1

4,5

9

6

3

2

7

8

1

9

2

A

_FIG.4_

DETAIL *B*

SICHT AUS - *A*

SCHNITT *A-A*

FIG.5

EP 3 514 602 A1

DETAIL – A

FIG.6

Europäisches
Patentamt

European
Patent Office

Office européen
des brevets

**EUROPÄISCHER RECHERCHENBERICHT**

Nummer der Anmeldung

EP 18 00 0055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 407 811 A1 (SONY CORP [JP]) 18. Januar 2012 (2012-01-18) * Absätze [0038] - [0080], [0125]; Abbildungen 2, 3 * ----- | 1-15 | INV. G02B27/00 G02B21/36 |
| A | REISS, ROGER S: "Optomechanical Medical Devices (Instruments)", SPIE, PO BOX 10 BELLINGHAM WA 98227-0010 USA, 15. März 2004 (2004-03-15), XP040252939, DOI: 10.1117/12.512089 * section 9.6 * ----- | 2 | |
| A | GB 691 610 A (ASS ELECT IND) 20. Mai 1953 (1953-05-20) * Seite 1, Zeilen 9-14, 83-88 * * Seite 2, Zeilen 45-48 * * Abbildung 1 * ----- | 2 | |
| A | SPENGEN VAN W M ET AL: "EXPERIMENTAL ONE- AND TWO-DIMENSIONAL MECHANICAL STRESS CHARACTERIZATION OF SILICON MICROSYSTEMS USING MICRO-RAMAN SPECTROSCOPY", VISUAL COMMUNICATIONS AND IMAGE PROCESSING; 20-1-2004 - 20-1-2004; SAN JOSE,, Bd. 4175, 1. Januar 2000 (2000-01-01), Seiten 132-139, XP008011295, DOI: 10.1117/12.395600 ISBN: 978-1-62841-730-2 * EXPERIMENTAL SETUP; Abbildung 2 * ----- | 9,14 | RECHERCHIERTE SACHGEBIETE (IPC) G02B |

Der vorliegende Recherchenbericht wurde für alle Patentansprüche erstellt

| Recherchenort | Abschlußdatum der Recherche | Prüfer |
|---|---|---|
| München | 13. Dezember 2018 | Zwerger, Markus |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
　　Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 00 0055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2018

| Im Recherchenbericht angeführtes Patentdokument | Datum der Veröffentlichung | Mitglied(er) der Patentfamilie | Datum der Veröffentlichung |
|---|---|---|---|
| EP 2407811 A1 | 18-01-2012 | CN 102331622 A<br>EP 2407811 A1<br>JP 5655557 B2<br>JP 2012037861 A<br>US 2012007977 A1 | 25-01-2012<br>18-01-2012<br>21-01-2015<br>23-02-2012<br>12-01-2012 |
| GB 691610 A | 20-05-1953 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- TW 201631348 A
- JP 2017062438 A
- WO 2017057071 A1
- TW 201632934 A1

**In der Beschreibung aufgeführte Nicht-Patentliteratur**

- **SCHUMANN HERMAN.** Metallographie. VEB Deutscher Verlag für Grundstoffindustrie, 1975, 34-55